**Europäisches Patentamt**

**European Patent Office**

**Office européen des brevets**

(19)

(11) Numéro de publication: **0 197 839 B1**

(12) **FASCICULE DE BREVET EUROPEEN**

(45) Date de publication du fascicule du brevet:
22.02.89

(51) Int. Cl.⁴: **B60H 1/00,** F25B 47/00,
**B64D 13/08**

(21) Numéro de dépôt: **86400635.8**

(22) Date de dépôt: **25.03.86**

(54) **Procédé et dispositif de chauffage pour véhicules à besoin de puissance limitée.**

(30) Priorité: **26.03.85 FR 8504492**

(43) Date de publication de la demande:
**15.10.86 Bulletin 86/42**

(45) Mention de la délivrance du brevet:
**22.02.89 Bulletin 89/8**

(84) Etats contractants désignés:
**DE FR GB IT NL SE**

(56) Documents cités:
**DE-A- 3 318 025**
**FR-A- 1 554 833**
**FR-A- 2 438 807**
**GB-A- 1 395 083**
**US-A- 4 286 435**
**US-A- 4 313 313**
**US-A- 4 384 608**
**US-A- 4 490 989**

(73) Titulaire: **ABG SEMCA, 3, Villa Thoréton,
F-75015 Paris(FR)**

(72) Inventeur: **Balducci, David, THOMSON-CSF
SCPI 19, avenue de Messine, F-75008 Paris(FR)**

(74) Mandataire: **Grynwald, Albert et al, THOMSON-CSF
SCPI 19, avenue de Messine, F-75008 Paris(FR)**

## Description

La présente invention concerne un procédé de chauffage. Elle concerne aussi un dispositif de chauffage pour véhicules à besoin de puissance limitée. Elle trouve son application dans le domaine aéronautique et notamment pour le chauffage des cabines d'hélicoptères et d'avions légers.

Dans de tels véhicules légers, la puissance que peut être consommée pour produire le chauffage de la cabine du pilote et des passagers est relativement limitée. Pour l'application à un hélicoptère, dans un exemple de réalisation, cette puissance est limitée aux environ de 5 Kilowatts. Une méthode actuellement utilisée consiste à prélever les gaz chauds des moteurs lesquels sont mélangés à un flux d'air venant de l'extérieur. Mais les hélicoptères et autres véhicules légers aériens comportent en général un groupe de climatisation. Cette climatisation permet de maintenir la température de la cabine en dessous d'un certain seuil en fonction du bilan thermique de la cabine. Comme le matériel embarqué en aéronautique doit être limité à un poids minimum, une telle solution de chauffage présente l'inconvénient notamment d'augmenter le poids d'une installation de climatisation embarquée.

On connaît par la demande de brevet DE-A 3 318 025 un dispositif de climatisation pouvant fonctionner en mode climatisation et en mode chauffage. Ce dispositif comporte au moins un compresseur et un évaporateur. Pour pouvoir fonctionner dans les deux modes, il nécessite une vanne quatre voies et une modification des conduites de circulation du fluide important.

La présente invention permet de simplifier ce type de dispositif.

En effet, elle concerne un procédé de chauffage qui modifie localement la marche d'un climatiseur embarqué, le climatiseur comportant au moins un compresseur et un évaporateur.

Le procédé selon l'invention conforme à la revendication 1 consiste à dériver tout ou partie du fluide après compression hors du circuit de climatisation, puis à le réinjecter après détente à l'entrée de l'évaporateur.

Elle concerne aussi un dispositif de chauffage pour véhicules à besoin de puissance limitée, du type qui comporte une climatisation par circulation d'air sur un circuit à fluide frigorigène. Un tel circuit comporte un compresseur dont le refoulement est relié à un condenseur puis à un réservoir tampon, et enfin une vanne thermostatique et un évaporateur. Le flux d'air extérieur traverse l'évaporateur auquel il cède des calories et est injecté dans la cabine. L'invention selon le dispositif de la revendication 2 se caractérise notamment par le fait que le dispositif de chauffage comporte sur le circuit de climatisation un organe de dérivation du refoulement du compresseur sur un dispositif déprimogène puis un mélangeur pour échauffer le flux d'air froid à travers l'évaporateur pour réaliser le chauffage de la cabine.

D'autres caractéristiques et avantages apparaîtront à l'aide de la description et des figures qui sont:

– la figure 1 un diagramme enthalpie pression expliquant le procédé de chauffage selon l'invention,
– la figure 2 et la figure 3 des schémas d'un mode de réalisation d'un dispositif en mode climatisation puis en mode chauffage, selon l'invention.

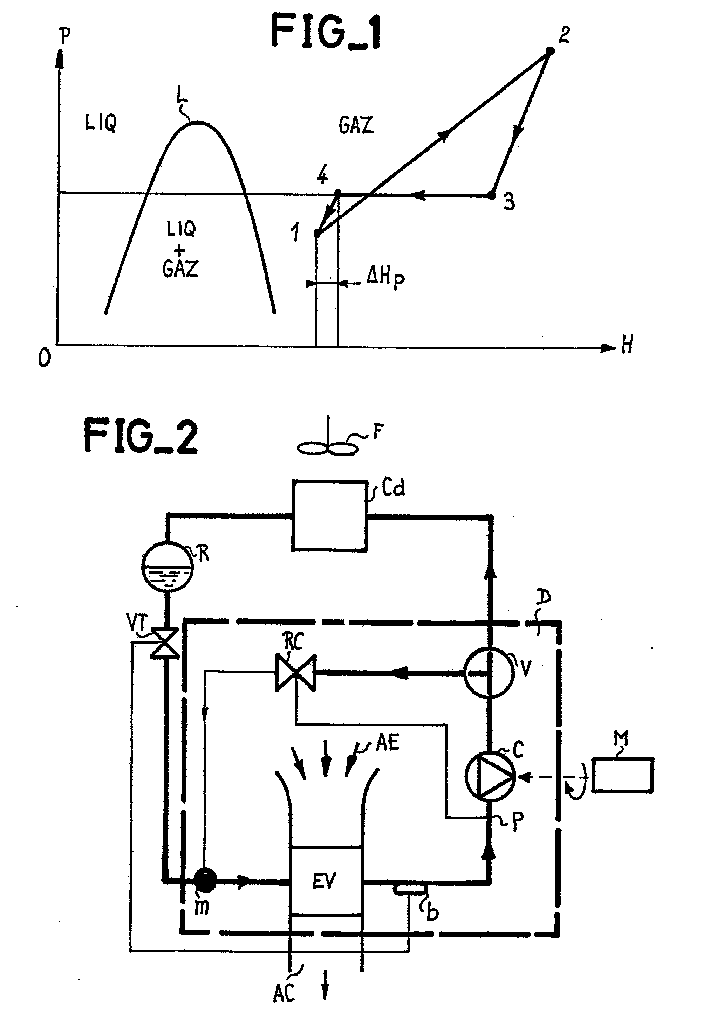

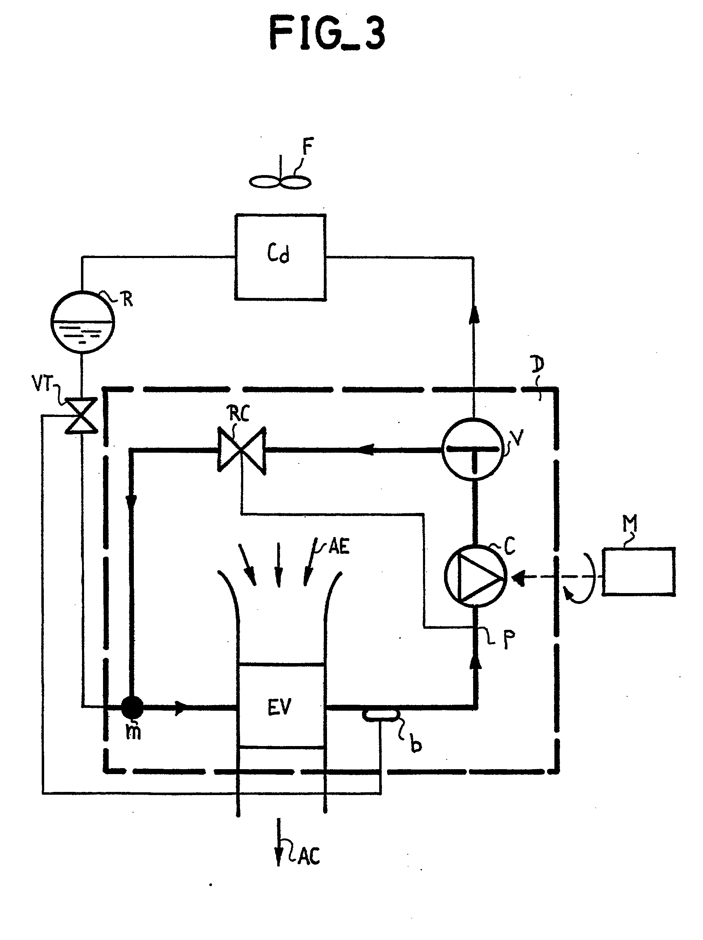

Aux figures 2 et 3 on a représenté un dispositif de chauffage D conforme à l'invention.

Un tel dispositif est composé à partir du dispositif de climatisation à boucle de fréon. Dans un tel dispositif un arbre moteur M fournit une puissance mécanique à un compresseur C. Comme la puissance délivrée par l'avionneur pour les installations annexes est limitée, il faut dimensionner les éléments de climatisation au mieux des caractéristiques désirées. En sortie du compresseur, le fluide travers un échangeur et se condense. Pour cela le condenseur Cd est équipé d'un ventilateur F. Le débit d'air extérieur forcé permet le refroidissement du fluide. La sortie du condenseur Cd est reliée à un réservoir R qui permet de disposer d'une réserve de fréon puis à une vanne thermostatique VT qui permet de réguler le débit du fluide frigorigène dans l'évaporateur. Enfin le mélange liquide-gaz est réchauffé dans un évaporateur EV. L'évaporateur reçoit le fluide d'air AE de recirculation de cabine. Cet air AE provient par exemple du recyclage de l'air de la cabine. L'air qui a cédé ses calories à l'évaporateur, est alors réinjecté dans la cabine. Sur le circuit de fréon, la sortie de l'évaporateur EV est raccordée à l'aspiration du compresseur C. Une telle boucle de climatisation est bien connue et largement répandue dans les systèmes embarqués.

L'invention réside dans le fait d'inverser le fonctionnement de l'évaporateur EV quand de l'air chaud doit être soufflé en cabine. L'utilisation du circuit de climatisation permet ainsi de réduire considérablement la part du poids du système de chauffage dans le poids total des équipements auxiliaires embarqués. A cette fin, l'invention prévoit de conserver le fréon sous forme gazeuse à une température relativement élevée de façon à ce que l'air de recirculation AE soit réchauffé à son contact. Un moyen de l'invention consiste à disposer un organe de dérivation comme une vanne à trois tubulures d'accès V disposées au refoulement du compresseur C. Une telle vanne V comporte une entrée de fréon et deux sorties qui peuvent être choisies alternativement. La commande de la voie choisie peut être réalisée manuellement par l'opérateur ou automatiquement par un capteur de température.

A la figure 2 la vanne V est schématiquement représentée en position de climatisation. A cette fin, le refoulement du compresseur est envoyé au condenseur Cd.

A la figure 3 on a représenté une variante d'exécution selon laquelle une partie du flux gazeux de refoulement est fournie à un régulateur RC de capacité qui permet d'augmenter la capacité de réglage du dispositif de climatisation. A cet effet, une part gazeuse du fréon est injectée par un mélangeur m dans la veine en phase gaz/liquide fournie par la vanne thermostatique VT. Le régulateur de capacité est commandé par exemple par un capteur de pression disposé à l'entrée P d'aspiration du compresseur.

Selon l'invention, le fréon est dérivé depuis le refoulement du compresseur jusqu'au dispositif déprimogène RC. Ce dispositif RC réalise une détente isenthalpique qui permet de détendre le fréon en phase gazeuse sans perte d'énergie et autorise le transfert dans l'évaporateur qui travaille alors en fonctionnement inverse. En effet, au lieu d'absorber les calories de l'air extérieur ou de l'air de recirculation de la cabine, il cède les calories du fréon gazeux de façon à réchauffer en air chaud AC la cabine.

Dans un mode de réalisation, l'organe déprimogène peut être constitué par le régulateur de capacité du dispositif de climatisation lui-même.

Dans un autre mode de réalisation, la dérivation du refoulement du compresseur sur l'évaporateur peut être réalisée par l'arrêt du moteur du ventilateur F qui équipe le condenseur Cd.

Dans un autre mode de réalisation, plusieurs dispositifs déprimogènes sont mis en parallèle et peuvent être sélectionnés en fonction du degré de réchauffement désiré. Ce peut être rendu nécessaire quand l'organe déprimogène principal est constitué par le régulateur de capacité RC qui équipe normalement le climatiseur. On met alors en parallèle avec le régulateur de capacité RC un ou plusieurs organes déprimogènes supplémentaires constitués par des ajutages. Dans un autre mode de réalisation, on utilise un organe déprimogène comportant un ajutage à section de passage pilotable. Les différentes commandes des organes qui ont été décrits peuvent être réalisées ou bien par des paramètres thermodynamiques comme le prélèvement de pression dans les canalisations ou bien par des moyens électroniques utilisant les capteurs adaptés, de manière à obtenir le degré de réchauffage désiré. Ce réchauffage peut être exprimé par tout paramètre mesurable comme la température ambiante ou non mesurable comme le confort des occupants.

Le procédé selon l'invention ne permettant pas d'utiliser le compresseur à pleine puissance à cause du problème de l'aspiration de fréon liquide. Pour fournir le réchauffement nécessaire il est prévu aussi de disposer à l'entrée d'air de l'évaporateur EV une résistance chauffante ou tout autre moyen réchauffant ou préchauffant la veine d'air à chaffer selon l'invention. Dans un autre mode de réalisation, on préchauffe le réservoir tampon et l'évaporateur.

A la figure 1 on a représenté un cycle de fonctionnement du procédé selon l'invention. Au point 1, on est disposé à l'entrée du compresseur qui permet d'augmenter la pression, la température et l'enthalpie d'un fluide frigorigène comme le fréon. Au point 2, le fréon a reçu une certaine quantité d'énergie. La détente 2–3 dans l'organe déprimogène RC est sensiblement sans pertes d'énergie. Puis dans la partie 3–4 le fréon réalise un réchauffage isobare du flux d'air traversant l'évaporateur EV. On a simulé les pertes de charge à l'aspiration pour fermer le cycle dans la partie de 4 à 1 de la figure 1.

## Revendications

1. Procédé de chauffage à partir d'un climatiseur embarqué à bord d'un véhicule à besoin de puissance limitée comportant au moins un compresseur (C) et un évaporateur (EV), caractérisé en ce qu'il consiste à dériver tout ou partie du fluide après compression hors du circuit de climatisation, puis à le réinjecter (m) après détente à l'entrée de l'évaporateur (EV).

2. Dispositif de chauffage pour véhicules à puissance limitée, de type comportant une climatisation par circulation d'air atmosphérique sur un circuit à fluide frigorigène comportant un compresseur (C) dont le refoulement est relié à un condenseur (Cd) puis à un réservoir tampon (R), une vanne thermoplastique (VT) et un évaporateur (EV), caractérisé en ce qu'il comporte un organe (V) de dérivation du refoulement du compresseur (C) vers un dispositif déprimogène (RC) pour réchauffer le flux d'air atmosphérique (AE) à travers l'évaporateur (EV), avant son entrée (AC) en cabine.

3. Dispositif selon la revendication 2, caractérisé en ce que l'organe (V) de dérivation est une vanne à une entrée commutable sur l'une ou l'autre de deux sorties affectées l'une à la climatisation, la seconde au chauffage.

4. Dispositif selon la revendication 2, caractérisé en ce que l'organe déprimogène (RC) assure une détente isenthalpique (2–3).

5. Dispositif selon la revendication 4, caractérisé en ce que l'organe déprimogène est un régulateur de capacité (RC) dont la commande est assurée en fonction de la pression à l'aspiration (p) du compresseur (C), et qui est relié à l'entrée de l'évaporateur (EV) par un mélangeur (m).

6. Dispositif selon la revendication 5, le condenseur (Cd) comportant un ventilateur (F), caractérisé en ce que la dérivation du refoulement du compreseur (C) est assurée par arrêt du ventilateur (F).

7. Dispositif selon la revendication 5, caractérisé en ce que le régulateur (RC) de capacité est associé en parallèle avec au moins un ajutage supplémentaire.

8. Dispositif selon la revendication 5, caractérisé en ce que le régulateur (RC) de capacité comporte un ajutage à section de passage pilotable.

9. Dispositif selon les revendications 7 et 8, caractérisé en ce que la mise en parallèle des ajutages supplémentaires ou le pilotage de la section de passage est commandé en fonction du degré de réchauffage désiré.

10. Dispositif selon l'une des revendications 2 à 9, caractérisé en ce qu'il comporte un dispositif de préchauffage, comme une résistance électrique, dans le flux d'air (AE) entrant dans l'évaporateur (EV), qui vient en addition quand le chauffage est repris.

11. Dispositif selon l'une des revendications 2 à 9, caractérisé en ce que l'on dispose des moyens de préchauffage du réservoir tampon (R) et de l'évaporateur (EV) pour compléter l'effet thermodynamique obtenu.

## Patentansprüche

1. Heizverfahren, mit einem an Bord eines Fahrzeugs mitgeführten Klimatisierungsgerät beschränkter Leistungsaufnahme, das mindestens einen Kompressor (C) und einen Verdampfer (EV) aufweist, dadurch gekennzeichnet, daß die gesamte oder ein Teil der Flüssigkeit nach der Kompression aus dem Klimatisierungskreis abgezweigt und nach Entspannung wieder an den Eingang des Verdampfers (EV) zurückgespeist wird.

2. Heizvorrichtung mit beschränkter Leistung für Fahrzeuge, mit Klimatisierung durch Umwälzen von Umgebungsluft über einen Kühlfluidkreis, der einen Kompressor (C), dessen Förderausstoß in einen Kondensator (Cd) und dann in einen Pufferspeicher (R) geleitet wird, ein thermoplastisches Ventil (VT) und einem Verdampfer (EV) aufweist, dadurch gekennzeichnet, daß sie ein Organ (V) zur Abzweigung des Förderausstoßes des Kompressors (C) in eine Unterdruck erzeugende Vorrichtung (RC) aufweist, um den Umgebungsluftstrom (AE) beim Durchgang durch den Verdampfer (EV) vor seinem Eintritt (AC) in die Kabine wieder aufzuheizen.

3. Vorrichtung nach Anspruch 2, dadurch gekennzeichnet, daß das Abzweigungsorgan (V) ein Ventil mit einem auf den einen oder anderen von zwei Ausgängen umschaltbaren Eingang ist, von denen der eine Ausgang der Klimatisierung und der andere der Beheizung zugeordnet ist.

4. Vorrichtung nach Anspruch 2, dadurch gekennzeichnet, daß das Unterdruck erzeugende Organ (RC) eine isenthalpische Entspannung (2–3) herbeiführt.

5. Vorrichtung nach Anspruch 4, dadurch gekennzeichnet, daß das Unterdruck erzeugende Organ ein Durchsatzleistungsregler (RC) ist, dessen Steuerung in Abhängigkeit vom Ansaugdruck (p) des Kompressors (C) erfolgt und der über einen Mischer (m) an den Eingang des Verdampfers (EV) angeschlossen ist.

6. Vorrichtung nach Anspruch 5, in der der Kondensator (Cd) einen Ventilator (F) aufweist, dadurch gekennzeichnet, daß die Abzweigung des Förderausstoßes des Kompressors (C) durch das Anhalten des Ventilators (F) bewirkt wird.

7. Vorrichtung nach Anspruch 5, dadurch gekennzeichnet, daß der Durchsatzleistungsregler (RC) mindestens einem zusätzlichen Strahl parallel zugeordnet ist.

8. Vorrichtung nach Anspruch 5, dadurch gekennzeichnet, daß der Durchsatzleistungsregler (RC) einen Strahl mit steuerbarem Durchtrittsquerschnitt aufweist.

9. Vorrichtung nach den Ansprüchen 7 und 8, dadurch gekennzeichnet, daß das Parallelschalten der zusätzlichen Strahlen oder die Steuerung des Durchtrittsquerschnittes in Abhängigkeit vom Grad der gewünschten Aufheizung erfolgt.

10. Vorrichtung nach einem der Ansprüche 2 bis 9, dadurch gekennzeichnet, daß sie eine Vorwärmeinrichtung, z.B. einen elektrischen Widerstand, im in den Verdampfer (EV) eintretenden Luftstrom (AE) aufweist, der zusätzlich in Aktion tritt, wenn die Beheizung wiederaufgenommen wird.

11. Vorrichtung nach einem der Ansprüche 2 bis 9, dadurch gekennzeichnet, daß Mittel zur Vorwärmung des Pufferspeichers (R) und des Verdampfers (EV) vorgesehen sind, um die erzielte thermodynamische Wirkung zu vervollständigen.

## Claims

1. A heating method using an air conditioner of limited power consumption provided on board of a vehicle and comprising at least one compressor (C) and one evaporator (EV), characterized in that the total or a part of the fluid is derived from the air conditioning circuit after compression, and then reinjected (m) after pressure relief at the inlet of the evaporator (EV).

2. A heating device of limited power for vehicles, of the type comprising an air conditioning by circulation of atmospheric air across a refrigerating fluid circuit comprising: a compressor (C), whose discharge fluid is fed to a condenser (Cd) and then to a buffer tank (R), a thermoplastic valve (VT) and an evaporator (EV), characterized in that it includes an element (V) for deriving the discharge fluid of the compressor (C) towards a depression element (RC) for reheating the atmospheric air flow (AE) across the evaporator (EV) prior to its entry (AC) into the cabin.

3. A device according to claim 2, characterized in that the derivating element (V) is a valve having an intake reversible to the one or the other of two outlets, one of which is attributed to the air conditioning, the other to the heating.

4. A device according to claim 2, characterized in that the depression element (RC) ensures an isenthalpic pressure relief (2–3).

5. A device according to claim 4, characterized in that the depression element is a flow rate regulator (RC), whose control is ensured as a function of the suction pressure (p) of the compressor (C) and which is connected to the intake of the evaporator (EV) via a mixer (m).

6. A device according to claim 5, wherein the condenser (Cd) comprises a fan (F), characterized in that the derivation of the discharge fluid of the compressor (C) is ensured by the stopping of the fan (F).

7. A device according to claim 5, characterized in that the flow rate regulator (RC) is associated in parallel with at least one additional jet.

8. A device according to claim 5, characterized in that the flow rate regulator (RC) comprises a jet having an adjustable flow section.

9. A device according to claims 7 and 8, characterized in that the operation of connecting in parallel the additional jets or of adjusting the flow section is controlled in accordance with the desired heating degree.

10. A device according to any one of claims 2 to 9, characterized in that it comprises a preheating device such as an electric resistance, disposed in the air flow (AE) entering the evaporator (EV) and which adds to the heating when it is resumed.

11. A device according to any one of claims 2 to 9, characterized in that means for preheating the buffer tank (R) and the evaporator (EV) are provided for in order to complete the obtained thermodynamic effect.

EP 0 197 839 B1

FIG_1

FIG_2

# FIG_3